# EUROPEAN PATENT APPLICATION

(11) **EP 0 653 895 A2**
(43) Date of publication of application: **17.05.1995**
(21) Application number: 94117479.9
(22) Date of filing: 05.11.1994
(51) Int. Cl.: H04Q 7/38, H04M 1/72

(54) **Identity authentication method suitable for mobile applications and telephone apparatus therefor**

(30) Priority: 12.11.1993 IT MI932413
(71) Applicant: ALCATEL N.V., NL-1077 XX Amsterdam (NL)
(72) Inventor: Panico, Luigi, I-84091 Battipaglia (SA) (IT); Trimarchi, Paola, I-84133 Salerno (IT)
(74) Representative: Pohl, Herbert, Dipl.-Ing

(57) **Abstract**

This invention relates to an identity authentication method suitable for mobile radio applications, to a telephone set and to a security unit designed to implement the method.

The basic idea consists in providing for at least one authentication key to be supplied by the user itself and not through information stored in the terminal or in one extractable module of it, and further in that the user has complete and exclusive control over it.

## Description

The present invention relates to an identity authetication method suitable for mobile applications, to a telephone set and to a security unit both designed to implement the method.

In mobile systems, the problem of security is strongly felt from one side to assure confidentiality of transmitted data (often speech signals) and, from the other side, to assure a correct call charging, i.e. to avoid fraudulent use.

As to the second aspect, the Future Public Land Mobile Telecommunication System (FPLMTS) individuates three entities:
the user, the terminal, the service supplier; each of these entities must at first identify itself and then authenticate its identity.

The authentication procedure provided for is based upon challenge/response protocols using authentication keys; these are stored in a User Identity Module (UIM) for user authentication, in the terminal for terminal authentication, and in the telecommunication network or exchange for the service supplier authentication; the UIM is, e.g., a magnetic or electronic card. The theft of the terminal and/or UIM anyway leads to possible fraudulent use.

It is an object of the present invention to make a further contribution to the security problem solution.

This object is achieved through the identity authentication method having the feature set forth in claim 1, and through the telephone set and the security unit having the features set forth in claims 4 and 6 respectively; further advantageous aspects of the present invention are set forth in the subclaims.

The invention is based on the underlying idea that consists in providing for at least one authentication key be supplied by the user itself and not through information stored in the terminal or in an extractable module of its, and that further the user have complete and exclusive control on it.

The invention will result better from the following description.

The method in accordance with the present invention is realized through a telephone set provided with a push-button dial, e.g., whenever the telephone set is activated or prior to every call.

Naturally, prior to the identity authentication step, a step of identity declaration is necessary; moreover, also a step of service request could be necessary, sooner or later, in that circumstance in which the services available are numerous and selectively authorized; at the end of such steps the terminal will be enabled for the required service if the declared identity is correct.

The present method provides for the sending of at least a first authentication key constituted by a sequence of numerals that are determined on the basis of data received from the keyboard, then supplied to the user.

In addition to such first key, other keys constituted by sequences of numerals can be sent, which are determined on the basis of data stored in the telephone set and/or in an extractable module of its like a magnetic or electronic card.

If the sequence/s of numerals sent correspond to the declared identity, the authentication operation will have a positive outcome.

Naturally, it is advantageous that this first key can be changed at will by the user.

Then the present method provides that, after the sending of such first key, the telephone set realized the sending of a second key structurally similar to the first key and whose numerals are determined on the basis of data received by the keyboard, therefore provided by the user.

Thus, if the authentication operation, carried out on the basis of the first key, has a positive outcome, the sequence of numerals of said second key will, starting from that instant, be the new authentication key of the user.

In order to be still more sure that the modified key is the one wished by the user, the present method can provide for that, after the sending of the second key, the telephone subset realized the sending of a third key structurally similar to the first key and whose numerals are determined on the basis of data received from the keyboard, therefore supplied by the user.

It is clear that the change of authentication key occurs only if sequences corresponding to the second and third keys coincide.

In order to be able to carry out the present method it is necessary to provide for a suitable telephone set.

Such a telephone set comprises a push-button dial, storage means for storing at least one first authentication key and connected with said dial for their filling up, and transmission means connected with the storage means for sending their content in an authentication step.

In addition, the storage means can be designed to store also a second and a third authentication key.

In order that such method lead to desired results, it is necessary to provide for a suitable security unit. Such a security unit, allowing the enabling the supply of telecommunication services to a plurality of users, comprises a control unit for receiving maintenance commands and enable requests, and a database having a record for each user of the plurality; the record is composed of at least a first and a second fields, the first field being designed to store the identity of the corresponding user, and the second field being designed to store an identity authentication key.

Upon receipt of an enable request, the control unit is able to modify the content of the second field of one of the records, that of the user which has forwarded the enable request.

Naturally, not all the enable requests will lead to a modification of the authentication key; this will occur only when the user requires it at the instant of authentication.

In order to obtain a greater security it is advantageous that the control unit is capable of not outputting the content of the second field of the database record, neither upon a maintenance command nor upon an enable request; in this way the identity authentication key in possession of the user cannot be recognized even by operators of the exchange or of the telecommunication network.

However, it is necessary that such operators are capable of carrying out some operations on such second field: for instance, to include a new user in the database or to overcome the drawback deriving from the forgetfulness of the key by the user.

The control unit is then designed to assign a pre-established value to the content of the second field of a selected record, upon receipt of a maintenance command.

A unit like the one described above may be employed in a telecommunication exchange or in a telecommunication network, even together with others.

Its positioning depends on the fact that the security problem is solved through distributed or concentrated architectures.

## Claims

1. Identity authentication method based upon the sending, by a telephone subset provided with a keyboard, of at least one first authentication key constituted by a sequence of numerals, characterized in that the numbers of said sequence are determined on the basis of data received from said keyboard.

2. Method according to claim 1, characterized in that, owing to the sending of said first key, said set realized the sending of a second key structurally similar to said first key and whose numerals are determined on the basis of data received from said keyboard, having the function of modifying said first authentication key.

3. Method according to claim 2, characterized in that, owing to the sending of said second key, said set realizes the sending of a third key structurally similar to said first key and whose numerals are determined on the basis of data received from said keyboard, having the function of confirming said second authentication key.

4. Telephone set comprising a push-button dial, storage means for storing at least one first authentication key and transmission means connected with said storage means for sending their content in an authentication step, characterized in that said storage means are connected with said dial for their filling up.

5. Telephone set according to claim 4, wherein said storage means are designed to store a second and a third authentication keys.

6. Security unit for enabling the supply telecommunication services to a plurality of users, comprising a control unit for receiving maintenance commands and enable requests, and a database having a record for each user of said plurality composed by at least a first and a second fields, said first field being designed to store the identity of the corresponding user, and said second field being designed to store an identity authentication key, characterized in that said control unit is designed to modify the content of the second field of one of said records upon receipt of an enable request.

7. Security unit according to claim 6, characterized in that said control unit is designed to assign a pre-established value to the content of the second field of a selected record, upon receipt of a maintenance command.

8. Security unit according to claim 6, characterized in that said control unit is capable of not outputting the content of the second field of said database records, neither on the basis of a maintenance command nor on the basis of an enable request.

9. Telecommunication exchange comprising a security unit according to one of the claims 6 to 8.

10. Telecommunication network comprising at least one security unit according to one of claims 6 to 8.
